# EUROPEAN PATENT SPECIFICATION

(11) **EP 2 519 864 B1**
(45) Date of publication and mention of the grant of the patent: **26.02.2014**
(21) Application number: 10801525.6
(22) Date of filing: 21.12.2010
(51) Int. Cl.: G05D 11/00

(54) **PRECISION METERING DEVICE**
PRÄZISIONSMESSVORRICHTUNG
DISPOSITIF DE DOSAGE DE PRÉCISION

(30) Priority: 29.12.2009 US 290699 P
(43) Date of publication of application: 07.11.2012
(73) Proprietor: 3M Innovative Properties Company, Saint Paul, MN 55133-3427 (US)
(72) Inventor: CANDELORA, Andrew M.,, Saint Paul, Minnesota 55133-3427 (US); ASTLE, Robert E.,, Saint Paul, Minnesota 55133-3427 (US); BASSETT, Laurence W.,, Saint Paul, Minnesota 55133-3427 (US)
(74) Representative: Vossius & Partner
(86) International application number: PCT/US2010/061426
(87) International publication number: WO 2011/090652

(56) References cited:
- EP-A1- 0 098 419
- DE-A1- 1 815 446
- FR-A1- 2 240 439

## Description

The present disclosure generally relates to metering devices used to add precise amounts of concentrate to a solution.

Metering devices are used throughout industry to add specific amounts of one fluid to another fluid or solution in quantitative proportional relationships. For example, metering devices have been used to add syrups to soda in the beverage industry, to add fertilizer to sprinkler systems, and to add additives to water for detoxification or decontamination. Generally, metering systems pump a designated amount of a concentrate into a liquid stream of solution through a mixing device, such as a mixing head. Typically, the concentrate is metered into the liquid stream as a function of signals supplied by a liquid meter to solenoid valves in the liquid stream. These metering systems depend upon electronic controls and mechanical valves which can be somewhat imprecise and also can consume significant amounts of energy. Other metering devices are known that employ a single integral cylinder with chambers to receive pistons for the various liquids which are then added to one another downstream of the device.

EP 0 098 419 A1 discloses an equipment for the addition of a disinfectant to water at a specific mixing ratio, comprising a water pump connected to a water supply system, a disinfectant concentrate pump taking in disinfectant concentrate from a concentrate receptacle, and a mixing chamber. The water pump and the concentrate pump are constructed as piston pumps with pistons which are adapted to be acted upon on two sides, wherein the two operating spaces of the water pump are connected via control valves to the water supply system and to the mixing chamber. The operating spaces of the concentrate pump are connected to the concentrate receptacle via non-return intake valves and to the mixing chamber via non-return discharge valves, and the piston rods of the two piston pumps are rotatably secured to different fulcrums by means of a pivot lever pivotally connected to a centre of motion. For controlling the piston rod movements there are provided travel reversing switches for the pivot lever, said travel reversing switches actuating the control valves of the water pump.

FR 2 240 439 A1 and DE 18 15 446 A1 describe metering devices for metering liquid products.

There is a need for devices that can add precise amounts of concentrate to a solution at very high dilutions. For example, there is a need for devices that can provide concentrates to a solution using a dilution ratio ranging from about 1:1 to about 1:10,000, from about 1:10 to about 1:5,000 or even from about 1:50 to about 1:1000 by volume. State of the art devices have difficulty achieving this dilution ratio. There is also a need for a fully mechanical metering device that does not require added electrical energy. Finally, there is a need for a metering device that provides a precise amount of diluted solution at all times independent of the amount of solution that is needed.

In one aspect, a device is provided that includes a first chamber having a first volume and a second chamber having a second volume, each chamber comprising at least one outer wall, a first piston slideably disposed in the first chamber and sealably dividing the first chamber into a mixing portion and a driving portion, and a second piston coupled to the first piston, the second piston being slideably disposed in the second chamber and sealably defining a concentrate portion in the second chamber, the concentrate portion being in fluid communication with the mixing portion. Additional chambers that have additional concentrate portions are also envisioned as a part of this disclosure.

In another aspect, a method of adding concentrate to a solvent is provided that includes providing a device as described above, urging the first piston in a direction that enlarges the volume in the mixing portion of the first chamber and decreases the volume in the concentrate portion of the second chamber causing solvent to flow from one or more solvent sources into the mixing portion of the first chamber and causing concentrate to flow from the concentrate portion of the second chamber, through a concentrate conduit into the mixing chamber, mixing the concentrate and the solvent to form a solvent/concentrate mix as the volume of the mixing portion increases; closing valves in the concentrate conduit, at least one valve located in or near the first chamber and at least one valve located in or near the second chamber and opening at least one valve in fluid communication with an output conduit which is also in fluid communication with the mixing portion of the first chamber; and urging the piston in the opposite direction and opening a valve in the second chamber; allowing concentrate to flow from one or more concentrate sources through the concentrate conduit into the concentrate portion of the second chamber and, expelling the solvent/concentrate mix through an outlet conduit. A third chamber and a third piston as described for the device above are embodied by this disclosure.

In this disclosure:
"axially aligned" refers to two or more parts that share an axis of symmetry or parallel axes of symmetry;
"bladder" refers to a container that is deformable;
"conduit" refers to a fluid passageway;
"fluid" refers to a liquid or a gas;
"fluid communication" refers to the situation where two devices or parts of a device transfer fluid directly between each other; it is understood that other flow control devices may be included in the fluid communication system;
"linkage" refers to a system of elements used to transfer motion-the linkage can be a direct mechanical linkage or can be an indirect linkage through an energy-transferring medium that is later converted into mechanical motion such as, for example, an electrical signal to a solenoid valve; and
"mechanical communication" refers to two or more parts that have a linkage;
"proportional manner" refers to a predetermined fixed ratio but can also be construed to mean in a ratio that varies in a predictable manner; and
"solvent" refers to any solution to which concentrate is added whether pure solvent or solution.

The provided device and method can allow precise metering of small amounts of concentrate and can provide a precise amount of diluted solution at all times independent of the amount of solution that is needed. The provided device and method can be useful, for example, for adding catalysts to chemical reactions, adding antioxidants, heat and light stabilizers, dye solutions, or other liquid additives to product mixtures. Additionally the provided devices and methods can be useful for injecting precise amounts of additives to drinking water.

The above summary is not intended to describe each disclosed embodiment of every implementation of the present invention. The brief description of the drawings and the detailed description which follows more particularly exemplify illustrative embodiments.
Fig. 1 is a schematic drawing of an embodiment of a provided precision metering device.
Fig. 2 is a schematic drawing of another embodiment of a provided precision metering device that includes one concentrate source.
Fig. 3 is a schematic drawing of yet another embodiment of a provided precision metering device that includes two concentrate sources.

In the following description, reference is made to the accompanying set of drawings that form a part of the description hereof and in which are shown by way of illustration several specific embodiments. It is to be understood that other embodiments are contemplated and may be made without departing from the scope of the present invention. The following detailed description, therefore, is not to be taken in a limiting sense.

Unless otherwise indicated, all numbers expressing feature sizes, amounts, and physical properties used in the specification and claims arc to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

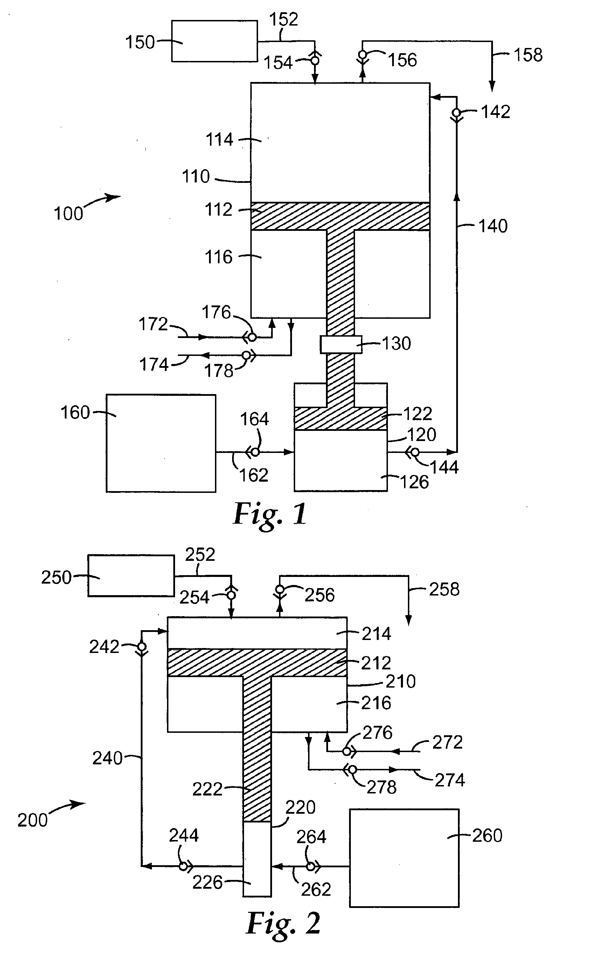

The provided precision metering devices are further herein described by the Figures. One embodiment of the provided device is shown in Fig. 1. Device 100 includes a first chamber 110, second chamber 120, first piston 112, second piston 122, linkage 130 and concentrate conduit 140. In the provided devices, the first chamber typically has a fixed volume that is greater than the fixed volume of the second chamber. First chamber 110 is divided into two portions-mixing portion 114 (the volume above first piston 112) and driving portion 116 (the volume below first piston 112). The volumes of mixing portion 114 and driving portion 116 vary as a function of the position of first piston 112 in first chamber 110. For example, when first piston 112 is completely extended (in its uppermost position as viewed in Fig. 1), the volume of mixing portion 114 is at its minimum and, consequently, the volume of driving portion 116 is at its maximum. Second piston 122 defines concentrate portion 126.

The first chamber can be axially aligned with the second chamber. For example, the first chamber can be directly aligned with the second chamber through a common axis. Alternatively the second chamber can be aligned on a separate axis wherein the separate axis is parallel to the first axis. Alternatively, the second chamber can have an axis that is at an angle to the axis to which the first chamber is aligned. For example, a screw gear can be used that can allow the second chamber to be at substantially right angles to the first chamber. Any other angles can also be accommodated by proper gearing.

It is not necessary that the first chamber or the second chamber to have rotational symmetry. For example, the linkage between the first piston and the second piston can be offset from center of one or the other pistons.

Linkage 130 can be any system that allows the transfer of mechanical motion between first piston 112 and second piston 122. In Fig. 1 the linkage is represented by 130 which is a generalized linkage element. Linkage 130 can be, for example, a solid rod that is mechanically connected to, or in some embodiments, is a rod element that has first piston 112 and second piston 122 at each end of the rod element. Thus, in one embodiment, first piston 112, linkage 130 (rod element), and second piston 122 are all one part. In other embodiments, linkage 130 can be, for example, a connecting rod, a radial linkage, an axial linkage, a shift linkage a clutch linkage, a rotary linkage, a peristaltic linkage, a spring or spring system, a gear or gear system, a hydraulic system, a telescoping system, a magnetic coupling system, or other systems that can transfer mechanical motion from first piston 112 to second piston 122 in a proportional manner. Additionally, the linkage can be indirect in that a signal, such as an electrical signal, can be a part of the communication linkage between the pistons. For example, one piston can send an electrical signal to another piston which can convert the signal into mechanical motion via a solenoid valve.

First chamber 110 and second chamber 120 can be in the shape of any volume element that can contain a fluid. For example, first chamber 110, second chamber 120, or both can be cylindrical. However, other shapes of volume elements for first chamber 110 and second chamber 120 are also contemplated. For example, first chamber 110, second chamber 120, or both can be rhomboid in shape having a cross-section of any type of polygon from a triangle to a multi-sided polygon. First piston 112 is disposed in first chamber 110 so that the edges of first piston 112 contact the complete outer wall of first chamber 110 and form a seal that divides first chamber 110 into the two portions described above. Analogously, second piston 122 is disposed in second chamber 120 so that the edges of second piston 122 contact the complete outer wall of second chamber 120 and form a seal that defines a concentrate portion. In both chambers, the seal is meant to prevent fluid from substantially traversing from one portion of the chamber to the other portion of the chamber. The first chamber can comprise a plurality of openings that can access the first chamber and the second chamber can comprise a plurality of openings that can access the second chamber. These openings typically are connected to conduits.

In the embodied device, concentrate portion 126 of second chamber 120 is in fluid communication with the mixing portion 114 of first chamber 110. In Fig. 1 fluid communication is through concentrate conduit 140. Concentrate conduit 140 can be a tube, a pipe, a channel, a hose, a passageway, a duct, a tunnel, a trough, or any combination of parts that allow fluid to flow from concentrate portion 126 of second chamber 120 into the mixing portion 114 of first chamber 110. Concentrate conduit 140 may include other items such as filters, meters, restrictors, pressure transducers, one-way checkvalves, or any other items that can modify the speed, pressure, and direction of flow of fluid from second chamber 120 to first chamber 110. Optional one-way checkvalves are shown in Fig. 1 for illustrative purposes only. One-way checkvalve 144 prevents the backflow of concentrate after it has been pushed out of concentrate portion 126 of first chamber 110 by an extension of second piston 122. One-way checkvalve 142 prevents backflow of concentrate during extension of first piston 112. It is contemplated that there can be additional concentrate chambers having additional pistons in mechanical communication with the first piston and that these additional concentrate chambers can also be in fluid communication with the mixing portion of the first cylinder.

Typically useful concentrates include, for example, formulation additives such as antioxidants, heat-and-light stabilizers, actinic radiation absorbers, dyes, and dispersed pigments, catalysts, medicaments, adjuvant, cosolvents, flavors, vitamins, minerals, disinfectants, deodorizers, antifouling agents, and antiscaling agents.

The method of adding concentrate to a solvent can be best illustrated again by referring to Fig. 1. Although Fig. 1 is illustrated in a vertical orientation, this is not to be limiting but only used herein to discuss the provided method. Solvent source 150 is provided that is in fluid communication with mixing portion 114 of first chamber 110 via solvent conduit 152. Similarly, concentrate source 160 is provided that is in fluid communication with concentrate portion 126 of second chamber 120 via concentrate conduit 162. Concentrate source 160 can be a container that has concentrate. The container can be, for example, a tank, bottle, box, or bladder. In the illustrated embodiment of Fig. 1, a one-way checkvalve 154 is provided in solvent conduit 152 to prevent back flow of solvent and one-way checkvalve 164 is provided in concentrate conduit 162 to prevent backflow of concentrate.

First piston 112 is urged so as to increase the volume of mixing portion 114 of first chamber 110 (downward in Fig. 1 as oriented). This motion of first piston 112 draws solvent into mixing portion 114 from solvent source 150 through conduit 152 and one-way checkvalve 154. At the same time, second piston 122 moves in proportion to the motion of first piston 112 so as to decrease the volume in concentrate portion 126 of second chamber 120 forcing concentrate through one-way checkvalve 144, into concentrate conduit 140, through one-way checkvalve 142, and into mixing portion 114 of first chamber 110. Thus, metered amounts of concentrate and solvent fill mixing portion 114 at the same time and mixing portion 114 has the same concentration of concentrate and solvent regardless of its volume. Mixing can occur statically or with the additional mixing elements that may be present and in communication with mixing portion 114. During this urging of first piston 112, in the illustrated embodiment of Fig. 1, one-way checkvalves 142, 144, and 154 are in an open position allowing flow in the direction indicated by the arrows and one-way checkvalves 156 and 164 are in a closed position resisting flow in the direction indicated by the arrows.

After mixing portion 114 has reached its maximum volume (which can be any volume determined by the length of the stroke of first piston 112), one-way checkvalves 142, 144, and 154 are closed and one-way checkvalves 156 and 164 are opened. The one-way checkvalves can change state passively by just responding to the flow direction or they can be manipulated hydraulically or electronically by an external control system. First piston 112 is then urged so as to decrease the volume of mixing portion 114 (upward in Fig. 1). This motion forces the mixture of solvent and concentrate through one-way checkvalve 156 and through solvent/concentrate mixture conduit 158 to the end use or a storage container (not shown). At the same time, second piston 122 is proportionally moved so as to increase the volume of the concentrate portion 126 of second chamber 120. This motion allow concentrate to flow from concentrate source 160 through concentrate conduit 162 and one-way checkvalve 164 to replenish the concentrate in concentrate portion 126.

Optional fluid input conduit 172 with one-way checkvalve 176 and fluid output conduit 174 with one-way checkvalve 178 are illustrated as a part of Fig. 1. Input conduit 172 provides a way to introduce fluid into driving portion 116 of first chamber 110. Useful fluids can include liquids or gases. The fluid can provide hydraulic lifting of first piston 112. The fluid can be any liquid or gas and can be forced into driving portion 116 by a pump. When first piston 112 is urged in the opposite direction, fluid can exit driving portion 116 through output conduit 174 and can be returned, for example, to a reservoir.

Fig. 2 is an illustration of an embodiment of a provided precision metering device. In this embodiment, device 200 includes a first chamber 210, second chamber 220, first piston 212, second piston 222, and concentrate conduit 240. First chamber 210 is divided into two portions-mixing portion 214 (the volume above first piston 212) and driving portion 216 (the volume below first piston 212). The volumes of mixing portion 214 and driving portion 216 vary as a function of the position of first piston 212 in first chamber 210 in the same manner as describe above for the embodiment illustrated in Fig. 1. In the embodiment shown in Fig. 2, first piston 212 and second piston 222 have a solid rod as a linkage between them. In this embodiment first piston 212 and second piston 222 are actually one piece. First piston 212 and second piston 222 are axially aligned so that when first piston 212 is urged in a manner so as to increase the volume of mixing portion 214, second piston 222 moves an equal distance along the common axis and decreases the volume in concentrate portion 226.

Fig. 2 also shows solvent source 250 in fluid communication with mixing portion 214 of first chamber 210 through solvent conduit 252 (containing one-way checkvalve 254), concentrate source 260 in fluid communication with concentrate portion 226 of second chamber 220 through conduit 262 (containing one-way checkvalve 264), solvent/concentrate mixture conduit 258 (containing one-way checkvalve 256), one-way checkvalves 242 and 244 to control flow of concentrate through concentrate conduit 240, and optional fluid input conduit 272 with one-way checkvalve 276 and fluid output conduit 274 with one-way checkvalve 278.

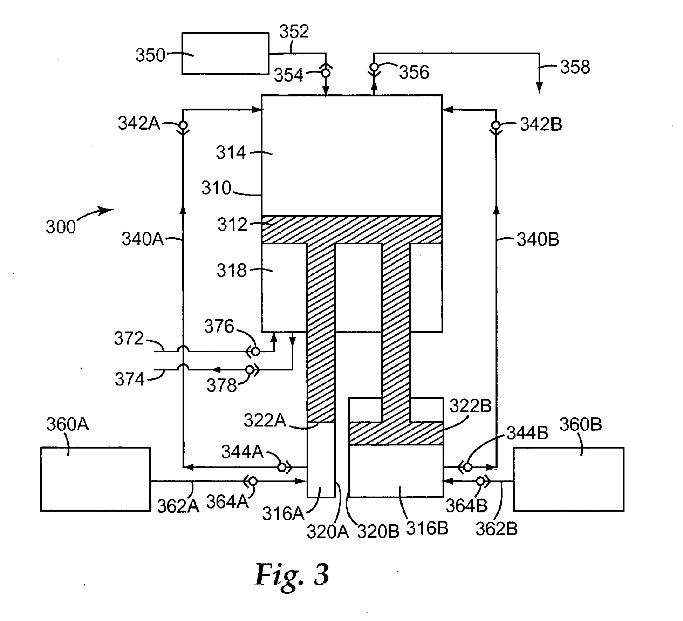

Fig. 3 illustrates another embodiment of a provided device. Fig. 3 illustrates device 300 that includes first chamber 310, second chamber 320A, and third chamber 320B. Solvent source 350 is in fluid communication with mixing portion 314 of first chamber 310 through solvent conduit 352 and one-way checkvalve 354. First concentrate source 360A is in fluid communication with concentrate portion 316A of second chamber 320A via concentrate conduit 362A and one-way checkvalve 364A and second concentrate source 360B is in fluid communication with concentration portion 316B of third chamber 320B via concentrate conduit 362B and checkvalve 364B. Additionally, concentrate portion 316A is in fluid communication with mixing portion 314 of first chamber 310 through fluid conduit 340A that includes one-way checkvalves 342A and 344A and concentrate portion 316B is in fluid communication with mixing portion 314 of first chamber 310 through fluid conduit 340B that includes one-way checkvalves 342B and 344B. First piston 312 separates first chamber 310 into mixing portion 314 and driving portion 318. Driving portion 318 is in fluid communication with fluid input conduit 372, which includes one-way checkvalve 376, and fluid output conduit 374, which includes one-way checkvalve 378. First piston 312 is in mechanical communication with both second piston 322A and third piston 322B. Second chamber 320A can be different in size, volume, and shape from third chamber 320B. Similarly, second piston 322A can be different in size, and shape from third piston 322B. Mixing portion 314 of first chamber 310 also is in fluid communication with solvent/mixture conduit 358 (containing one-way checkvalve 356). Although not illustrated in Fig. 3, it is contemplated that second piston and third piston, each, independently can have a different type of linkage to first piston 312.

The illustrated embodiments include a first chamber and one or two second chambers that contain concentrates. It is also contemplated that additional chambers containing additional concentrates that are in fluid communication with the mixing portion of the first chamber can be provided.

The provided device and method are useful for precise metering of concentrates into solvents. Using the provided device, a proportional amount of concentrate can be added to the solvent in the mixing portion of the first chamber so that the solvent/concentrate mixture in the mixing portion has the same proportionality regardless of the volume of the mixing portion (position of the first piston). With proper gearing the proportionality can range from 1:1 (solvent/concentrate on a volume basis) to very dilute ratios. For example, the concentrate can be diluted, on a volume basis), 1:1, 1:20, 1:50, 1:100, 1:500, 1:1000, 1:10,000 or even higher. It is also contemplated that, in some modes of operation, the first piston, the second piston, or both may not displace the full fixed volume of the first chamber or the second chamber. It is also contemplated that the amount of concentrate pushed through the concentrate conduit and into the mixing chamber of the first chamber might be limited by a mechanical or electrical stop.

It is also contemplated that the linkage can be variable and/or adjustable by using a mechanical or electrical control system. For example, the linkage can be adjustable and changeable during the operation of the device by the control system.

The provided device and method can be useful, for example, for adding catalysts to reaction mixtures, additives to liquid product streams or liquid products, formulation of medicaments, or additives to foods or beverages. The provided device and method is very useful where the dilution ratio is critical and the volume of product is small. It can replace batch formulation with a reliable, precise metering system that can deliver large or small amounts of solvent/concentrate mixture upon demand.

In some embodiments, the provided device does not need to use its own sources of power. For example, the system can be driven by wastewater streams that flow into the driving portion of the first chamber urging the first piston in one direction and by the solvent source that can act as a counterforce to urge the piston in the opposite direction.

Various modifications and alterations to this invention will become apparent to those skilled in the art without departing from the scope of this invention. It should be understood that this invention is not intended to be unduly limited by the illustrative embodiments and examples set forth herein and that such examples and embodiments are presented by way of example only with the scope of the invention intended to be limited only by the claims set forth herein as follows. All references cited in this disclosure are herein incorporated by reference in their entirety.

## Claims

1. A device comprising:
a first chamber (110) having a first volume and a second chamber (120) having a second volume, each chamber comprising at least one outer wall;
a first piston (112) slideably disposed in the first chamber (110); and
a second piston (122) coupled to the first piston (112), the second piston (122) being slideably disposed in the second chamber (120) and sealably defining a concentrate portion (126) in the second chamber (120);
**characterized in that** the first piston (112) sealably divides the first chamber (110) into a mixing portion (114) and a driving portion (116) and **in that** the concentrate portion (126) is in fluid communication with the mixing portion (114).

2. A device according to claim 1, wherein the first and second volumes are fixed.

3. A device according to claim 2, wherein the fixed volume of the first chamber (110) is greater than the fixed volume of the second chamber (120).

4. A device according to claim 1, wherein the first chamber (110) is axially aligned with the second chamber (120).

5. A device according to claim 1, wherein the first and second pistons (112, 122) are coupled by a linkage (130).

6. A device according to claim 5, wherein the linkage (130) is one of a connecting rod, a spring, a magnet, a gear, a hydraulic system, or combinations thereof.

7. A device according to claim 1, wherein the second piston (122) displaces a different volume than the first piston (112).

8. A device according to claim 1, wherein one or more solvent conduits (152) are in fluid communication with both the mixing portion (114) of the first chamber (110) and one or more solvent sources (150).

9. A device according to claim 8, wherein the concentrate portion (116) of the second chamber (120) is in fluid communication with one or more concentrate sources (150).

10. A device according to claim 9, wherein one or more concentrate sources (150) are contained in a bladder.

## Patentansprüche

1. Vorrichtung, umfassend:
eine erste Kammer (110), die ein erstes Volumen hat, und eine zweite Kammer (120), die ein zweites Volumen hat, wobei jede Kammer mindestens eine Außenwand umfasst;
einen ersten Kolben (112), der in der ersten Kammer (110) verschiebbar angeordnet ist; und
einen zweiten Kolben (122), der mit dem ersten Kolben (112) verbunden ist, wobei der zweite Kolben (122) in der zweiten Kammer (120) verschiebbar angeordnet ist und abdichtbar einen Konzentratabschnitt (126) in der zweiten Kammer (120) definiert;
**dadurch gekennzeichnet, dass** der erste Kolben (112) die erste Kammer (110) in einen Mischabschnitt (114) und einen Antriebsabschnitt (116) unterteilt, und dadurch, dass der Konzentratabschnitt (126) in Fluidverbindung mit dem Mischabschnitt (114) steht.

2. Vorrichtung nach Anspruch 1, wobei das erste und das zweite Volumen fest sind.

3. Vorrichtung nach Anspruch 2, wobei das feste Volumen der ersten Kammer (110) größer als das feste Volumen der zweiten Kammer (120) ist.

4. Vorrichtung nach Anspruch 1, wobei die erste Kammer (110) axial zur zweiten Kammer (120) ausgerichtet ist.

5. Vorrichtung nach Anspruch 1, wobei der erste und zweite Kolben (112, 122) durch ein Verbindungsstück (130) verbunden sind.

6. Vorrichtung nach Anspruch 5, wobei das Verbindungsstück (130) ein Element aus einer Verbindungsstange, einer Feder, einem Magneten, einem Getriebe, einem hydraulischen System oder einer Kombination derselben ist.

7. Vorrichtung nach Anspruch 1, wobei der zweite Kolben (122) ein anderes Volumen als der erste Kolben (112) verdrängt.

8. Vorrichtung nach Anspruch 1, wobei ein oder mehrere Lösungsmittelrohre (152) in Fluidverbindung mit dem Mischabschnitt (114) der ersten Kammer (110) und einer oder mehreren Lösungsmittelquellen (150) stehen.

9. Vorrichtung nach Anspruch 8, wobei der Konzentratabschnitt (116) der zweiten Kammer (120) in Fluidverbindung mit einer oder mehreren Konzentratquellen (150) steht.

10. Vorrichtung nach Anspruch 9, wobei eine oder mehrere Konzentratquellen (150) in einer Blase enthalten sind.

## Revendications

1. Dispositif comprenant :
une première chambre (110) ayant un premier volume et une deuxième chambre (120) ayant un deuxième volume, chaque chambre comprenant au moins une paroi externe ;
un premier piston (112) disposé de manière à pouvoir coulisser dans la première chambre (110) ; et
un deuxième piston (122) accouplé au premier piston (112), le deuxième piston (122) étant disposé de manière à pouvoir coulisser dans la deuxième chambre (120) et définissant, de manière à pouvoir assurer l'étanchéité, une portion de concentré (126) dans la deuxième chambre (120) ;
**caractérisé en ce que** le premier piston (112) divise, de manière à pouvoir assurer l'étanchéité, la première chambre (110) en une portion de mélange (114) et une portion d'entraînement (116) et **en ce que** la portion de concentré (126) est en communication fluidique avec la portion de mélange (114).

2. Dispositif selon la revendication 1, dans lequel les premier et deuxième volumes sont fixes.

3. Dispositif selon la revendication 2, dans lequel le volume fixe de la première chambre (110) est supérieur au volume fixe de la deuxième chambre (120).

4. Dispositif selon la revendication 1, dans lequel la première chambre (110) est alignée axialement avec la deuxième chambre (120).

5. Dispositif selon la revendication 1, dans lequel les premier et deuxième pistons (112, 122) sont accouplés par une liaison (130).

6. Dispositif selon la revendication 5, dans lequel la liaison (130) est une tige de connexion, un ressort, un aimant, un mécanisme, un système hydraulique, ou des combinaisons de ceux-ci.

7. Dispositif selon la revendication 1, dans lequel le deuxième piston (122) déplace un volume différent du premier piston (112).

8. Dispositif selon la revendication 1, dans lequel un ou plusieurs conduits de solvant (152) sont en communication fluidique avec à la fois la portion de mélange (114) de la première chambre (110) et une ou plusieurs sources de solvant (150).

9. Dispositif selon la revendication 8, dans lequel la portion de concentré (116) de la deuxième chambre (120) est en communication fluidique avec une ou plusieurs sources de concentré (150).

10. Dispositif selon la revendication 9, dans lequel une ou plusieurs sources de concentré (150) sont contenues dans une vessie.
